# EUROPEAN PATENT SPECIFICATION

(11) **EP 2 759 498 B1**
(45) Date of publication and mention of the grant of the patent: **21.09.2016**
(21) Application number: 13760717.2
(22) Date of filing: 24.01.2013
(51) Int. Cl.: B65G 47/90, B25J 15/00, D06B 5/16, D06B 23/00, D01H 9/18, B25J 9/02, B25J 15/02

(54) **AUTOMATED YARN CAPTURING MACHINE AND AUTOMATED YARN CAPTURING METHOD**
MASCHINE FÜR AUTOMATISIERTE GARNERFASSUNG UND VERFAHREN FÜR AUTOMATISIERTE GARNERFASSUNG
MACHINE DE CAPTURE DE FIL AUTOMATIQUE ET PROCÉDÉ DE CAPTURE DE FIL AUTOMATIQUE

(30) Priority: 14.03.2012 CN 201210067421
(43) Date of publication of application: 30.07.2014
(73) Proprietor: Advanced Manufacture Technology Center, China Academy of Machinery Science & Technology, Beijing 100083 (CN); Taian Companion Machinery Co., Ltd., Taian, Shandong 271000 (CN)
(72) Inventor: SHAN, Zhongde, Beijing 100083 (CN); LI, Zhou, Beijing 100083 (CN); WU, Shuangfeng, Beijing 100083 (CN); SUN, Fuzhen, Beijing 100083 (CN); CHEN, Duifan, Shandong 271000 (CN); LIU, Lin, Shandong 271000 (CN); LU, Qingfu, Shandong 271000 (CN)
(74) Representative: Peters, Hajo
(86) International application number: PCT/CN2013/070955
(87) International publication number: WO 2013/135114

(56) References cited:
- EP-A1- 0 311 016
- EP-A2- 0 651 084
- EP-B1- 0 130 092
- WO-A1-02/095114
- CN-A- 102 583 046
- CN-U- 202 508 614
- DE-A1- 19 727 135
- US-A- 5 119 621
- US-A- 5 119 621
- US-A- 5 207 052
- US-B1- 6 405 568

## Description

### Technical Field of the Invention

The disclosure relates to the field of yarn dyeing production, and in particular to an automated yarn grasping machine and an automated yarn grasping method.

### Background of the Invention

At present, the production line of cheese yarn dyeing in China basically completes yarn logistics through labour force, that is, yarn is grasped by people. Manual grasping of yarn is of low efficiency and the working environment is very harsh. Moreover, with the decrease of social labour in recent years, labour shortage has appeared in most regions of the county, resulting in an annual rise of labour cost in production. This tend would continue to expand in next few years or even decades and consequently cause the rise of cost in manual grasping of yarn.

EP 0651084 A2 discloses an automatic device for loading and unloading stacks of reels of yarn comprises a centering mechanism (8, 10-13, 17, 18, 20, 21, 100) of a vertical reel-holding rod (3) on which the reels (4) are, or are about to be, stacked the centering mechanism (8, 10-13, 17, 18, 20, 21, 100) comprises a vertical stem (13) on which a stack of reels to be moved is transferred so as to move it from a rod (3) to be unloaded to a rod (3) to be loaded, and a mechanism (24-29, 32, 35, 40) for removing and positioning the stack of reels that comprises an element (24) for removing the stack of reels (4) that is made to slide vertically to accomplish the removal or the positioning of the stack itself the centering mechanism (8, 10-13, 17, 18, 20, 21, 100) comprises sensor means (18, 20, 21, 100) suitable for detecting the vertical alignment of the stem (13) with the reel-holding rod (3) and to operate the activation of the removal and positioning mechanism (24-29, 32, 35, 40) the removal element of the removal and positioning mechanism (24-29, 32, 35, 40) is constituted by a pair of jaws (24) suitable for grasping a reel (4) at the base of the stack.

US 5119621 A discloses a maintenance device is provided in a two-for-one twister textile yarn processing machine having a plurality of spindle assembly stations in side-by-side relationship along the length of the machine for processing of yarn at each station as the yarn is fed from yarn supply packages carried by an adapter device and mounted in the spindle assembly, and an overhead conveyor mechanism extending the length of the machine generally above the spindle assembly stations and including spaced-apart downwardly-directed suspension holders for releasably receiving and carrying adapter devices with full yarn supply packages thereon and adapter devices with substantially empty yarn supply packages thereon to and from respective spindle assembly stations. The maintenance device is constructed for traveling to a respective spindle assembly station, removing an adapter device with substantially empty yarn supply packages from the respective spindle assembly and positioning such adapter device on the conveyor mechanism, and synchronously removing an adapter device with full yarn supply packages from the conveyor mechanism and positioning such adapter device in the respective spindle assembly.

EP 0130092 B1 discloses an installation and to clean processes to allow the automatic loading of textile materials on material holder adapted to be introduced into the apparatus for treating textile materials, and/or the automatic unloading of textile materials, including coils, carried by the carrier material of textile processing machinery, after the latter have been processed in these machines, planned treatments.

### Summary of the Invention

The disclosure provides an automated yarn grasping machine and an automated yarn grasping method, to solve problems existing in prior art such as low efficiency in manual grasping of yarn, harsh working environment and high labour cost.

The disclosure is realized through the following technical solution. The disclosure provides an automated yarn grasping machine, comprising: a yarn grasping unit, which comprises a gripping mechanism used for gripping a yarn cheese and a rotating-lifting mechanism used for driving the gripping mechanism to rotate and lift, the yarn cheese is a cylindrical yarn cheese; and a planar moving mechanism, which is used for driving the yarn grasping unit to move on a horizontal plane; the gripping mechanism comprises: a support plate, which is connected with the rotating-lifting mechanism; an upper bearing seat, which is fixedly connected with the support plate and has a plurality of bearing holes; a plurality of upper bearings, which is mounted in the bearing holes of the upper bearing seat respectively; a plurality of pivotable drive rods, which pass through the inner hole of the upper bearing; a gripping piece, which is fixed on the lower part of each drive rod, wherein adjacent gripping pieces form a gripping space to grip the yarn cheese; a drive device, which is mounted on the support plate and is connected with the drive rods to drive the drive rods to rotate; there are two upper bearings and two drive rods;
a first drive rod of the drive rods is fixedly provided with a fan-shaped toothed plate having a push rod, which is connected with the drive device; a second drive rod is fixedly provided with a toothed plate; the toothed plate is meshed with the fan-shaped toothed plate having a push; the first drive rod and the second drive rod are juxtaposed and spaced.

Further, the gripping piece comprises a yarn grasping rod connected with the lower part of the drive rod and a curved plate connected with the yarn grasping rod; the two curved plates are arranged symmetrically, with curved surfaces facing each other.

Further, the gripping mechanism further comprises a distance bushing, which has two bushing holes; the two bushing holes are connected with the lower parts of the two yarn grasping rods respectively, to limit the distance between the two yarn grasping rods.

Further, the drive device is a cylinder assembly, of which the output end drives the drive rods.

Further, the gripping mechanism further comprises: a lower bearing seat, which is fastened with the support plate and is arranged below the upper bearing seat, wherein the bearing holes of the lower bearing seat are concentric to the bearing holes of the upper bearing seat respectively; and a lower bearing, which is arranged in the bearing hole of the lower bearing seat.

According to another aspect of the disclosure, an automated yarn grasping method is provided, which uses the automated yarn grasping machine described above and comprises the following steps: a step of moving and positioning, in which the moving mechanism drives the yarn grasping unit to a horizontal position for grasping a yarn cheese and the rotating-lifting mechanism rotates and lowers the gripping mechanism to a vertical position for gripping the yarn cheese; a step of gripping, in which the gripping mechanism grips the yarn cheese; a step of lifting and moving, in which the rotating-lifting mechanism raises the gripping mechanism to a vertical leaving position, and the moving mechanism drives the yarn grasping unit to another horizontal position on the horizontal plane.

The method further comprises: repeating the step of moving and positioning, the step of gripping and the step of moving and lifting, and grasping a plurality of yarn cheeses in turn from the outer circle to the inner circle of a yarn cage.

Through the technical scheme above, the disclosure realizes automated yarn grasping and fills the gap in a cheese dyeing process, and thus improves efficiency and saves labour cost.

### Brief Description of the Drawings

For a better understanding of the disclosure, accompanying drawings described hereinafter are provided to constitute one part of the application; the schematic embodiments of the disclosure and the description thereof are used to illustrate the disclosure but to limit the disclosure improperly. In the accompanying drawings:
Fig. 1 shows an entire top view of an automated yarn grasping machine of the disclosure;
Fig. 2 shows a diagram of a yarn grasping unit of the automated yarn grasping machine of the disclosure;
Fig. 3 shows a stereo diagram of a dual-rod gripping mechanism of the automated yarn grasping machine of the disclosure;
Fig. 4 shows a front view of the dual-rod gripping mechanism of the automated yarn grasping machine of the disclosure;
Fig. 5 shows a diagram of the working state of gasping a yarn cheese by the automated yarn grasping machine of the disclosure;
Fig. 6 shows a diagram of gasping a yarn cheese by a curved plate of the automated yarn grasping machine of the disclosure;
Fig. 7 shows a diagram of the yarn cheese arrangement in a target yarn cage of the automated yarn grasping machine of the disclosure; and
Fig. 8 shows a diagram of the yarn cheese arrangement after a circle of yarn cheeses is grasped in the target yarn cage of the automated yarn grasping machine of the disclosure.

### Detailed Description of the Embodiments

The embodiment of the disclosure is described below in detail in conjunction with accompanying drawings. However, the disclosure can be implemented by multiple different methods limited and covered by the claims.

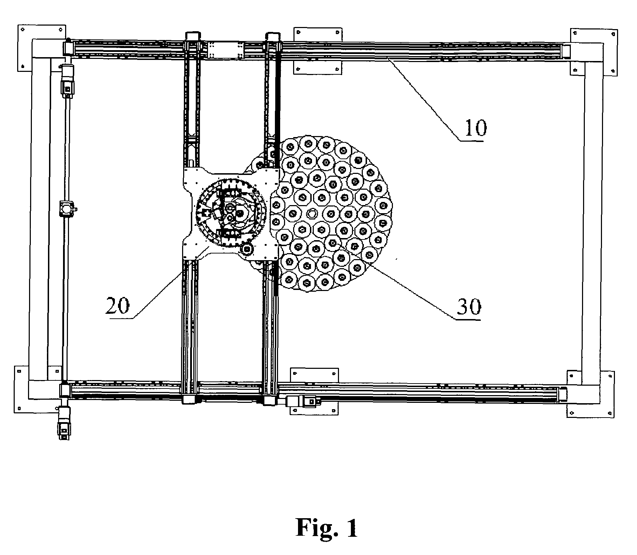

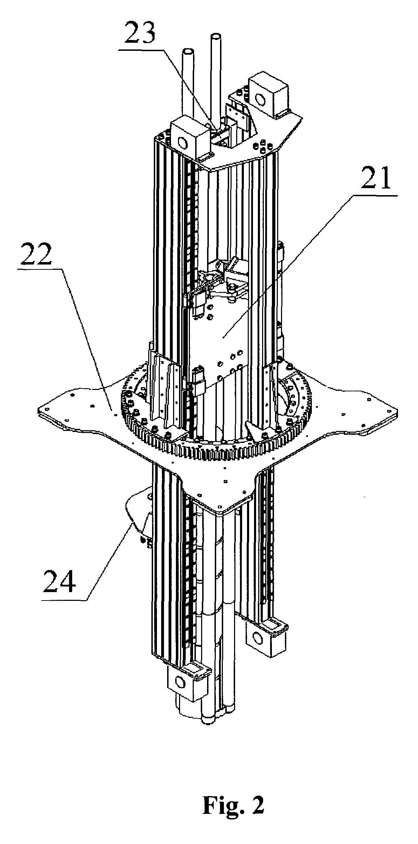

As shown in Fig. 1, the yarn grasping machine of the disclosure comprises: a rectangular-coordinate planar moving mechanism 10 and a yarn grasping unit 20, which are used for grasping a yarn cheese 30 in a yarn cage. As shown in Fig. 2, the yarn grasping unit 20 comprises: a gripping mechanism 21 used for gripping a yarn cheese 30, wherein the gripping mechanism 21 has a dual-rod structure; a rotating-lifting mechanism 22 connected with the gripping mechanism 21 and used for rotating and lifting the gripping mechanism 21; a guide mechanism 23, which is used for guiding and limiting the lifting direction of the gripping mechanism 21; and a stabilizing mechanism 24, which is used for stabilizing the position of a yarn cheese 30 after the yarn cheese 30 is gripped, wherein the stabilizing mechanism 24 preferably has double claws. The yarn grasping unit 20 is mounted on the rectangular-coordinate planar moving mechanism 10 having X, Y-direction moving units, and is driven by the rectangular-coordinate planar moving mechanism 10 to perform planar movement, so as to be positioned above a yarn cheese 30 needed to be grasped.

Preferably, the planar moving mechanism 10 comprises a frame type bracket arranged above the yarn cheese 30, a horizontal beam arranged on the frame type bracket, and a moving platform connected with the horizontal beam. The horizontal beam moves on the frame type bracket to provide a single-direction motion, and the moving platform moves on the horizontal beam to provide a motion of another direction (vertical), so as to realize a rectangular-coordinate motion of X and Y directions; the specific moving mode might be a rack motion or belt motion commonly used in this field. The rotating-lifting mechanism 22 comprises a rotating bracket, which is connected with the above moving platform and can rotate relative to the moving platform, for example, the rotating-lifting mechanism 22 is meshed with the moving platform via annular gears and can be driven by a motor or by other driving parts. A vertical bracket is connected with the rotating bracket, wherein the vertical bracket and the rotating bracket are fastened, and the vertical bracket is driven to lift vertically relative to the rotating bracket by mechanisms such as belt; the gripping mechanism 21 is fixedly connected with the vertical bracket and moves up and down on the linear guide rail of the vertical bracket; power is output by a motor arranged on the top of the vertical bracket and then is transmitted to the gripping mechanism 21 through a synchronous belt.

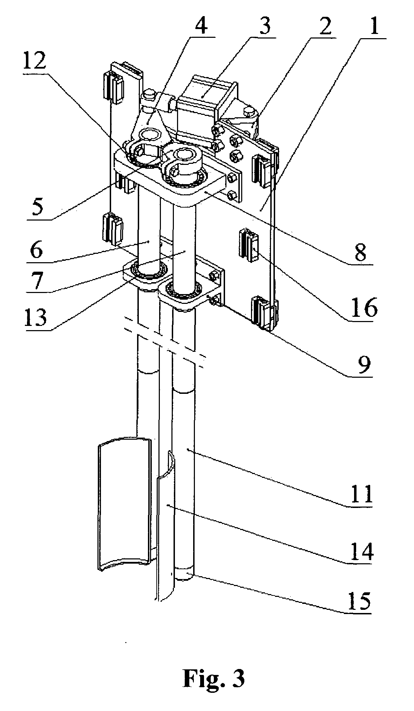

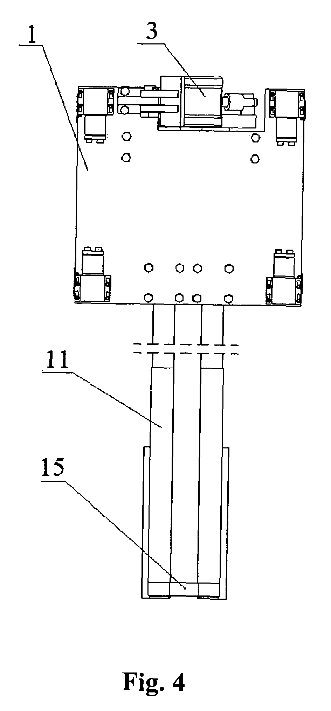

As shown in Fig. 3 and Fig. 4, the specific structure of one embodiment of the gripping mechanism 21 is as follows.

A support plate 1 is connected with the rotating-lifting mechanism 22. An upper bearing seat 8 is fastened with the support plate 1; a lower bearing seat 9 is arranged below the upper bearing seat 8 and is fastened with the support plate 1, wherein two inner circles of the lower bearing seat are concentric to the two inner circles of the upper bearing seat. A guide rail slide block 16 used for connecting with a guide mechanism 23 is fixedly connected with the support plate 1. Two upper bearings 12 and two lower bearings 13 are mounted in the inner circles of the upper bearing seat 8 and the lower bearing seat 9 respectively.

The gripping mechanism has a first drive rod 6 and a second drive rod 7, wherein the first drive rod 6 is fastened with a fan-shaped toothed plate 4 having a push rod, while the second drive rod 7 is fastened with a toothed plate 5. Preferably, the toothed plate 5 is fan-shaped. The assembly bodies of the first drive rod 6 and the fan-shaped toothed plate 4 having a push rod are inserted into the inner holes of the upper bearing 12 and the lower bearing 13, while the assembly bodies of the second drive rod 7 and the toothed plate 5 are inserted into the inner holes of another upper bearing 12 and lower bearing 13; the gears of the fan-shaped toothed plate 4 having a push rod are meshed with the gears of the toothed plate 5.

A cylinder assembly 3 comprises a cylinder, a cylinder block and a hinged spindle head. The push rod of the fan-shaped toothed plate 4 is inserted into a hole of the hinged spindle head extended from the cylinder assembly 3. A cylinder block lug 2 is fastened with the support plate 1, and the cylinder block lug 2 is fit with the cylinder block of the cylinder assembly 3 through a pin.

Two rigid curved plates 14 are fastened with two yarn grasping rods 11 respectively, and are arranged symmetrical. The fastening bodies of the symmetrical curved plate 14 and the yarn grasping rod 11 are fastened with the lower ends of the first drive rod 6 and the second drive rod 7 respectively. A distance bushing 15 is assembled at the bottom of two yarn grasping rods 11 to limit the distance between the two yarn grasping rods 11.

In the combined gripping mechanism 21, the cylinder assembly 3 performs extension and contract actions, to realize an equal-angle open-close movement of the two curved plates 14 through the driving of the first drive rod 6, the second drive rod 7 and the yarn grasping rod 11, so as to complete yarn grasping.

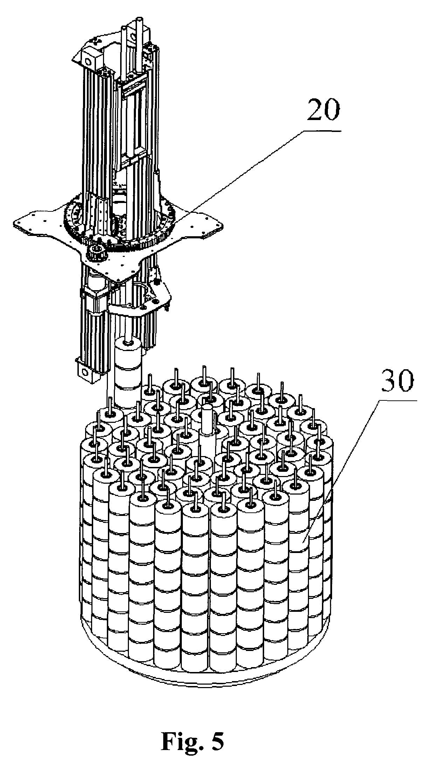

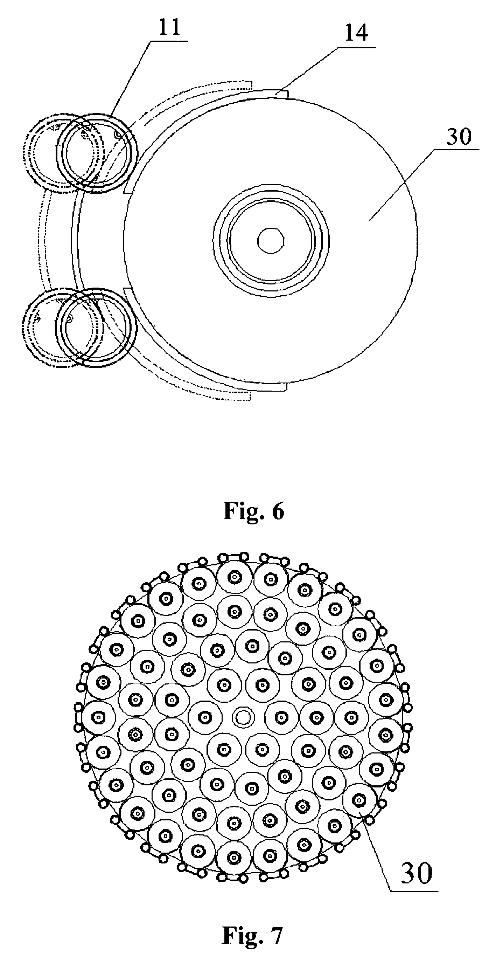

The working process of the automated yarn grasping machine of the disclosure is as follows: as shown in Fig. 5 and Fig. 6, the rectangular-coordinate planar moving mechanism 10 having X, Y-direction moving units drives the yarn grasping unit 20 to move, so as to position the yarn grasping unit 20 to be above a certain yarn cheese 30 on the outmost circle of the yarn cage; the rotating-lifting mechanism 22 rotates by certain angle and lowers the gripping mechanism 21 by a height so that the curved plate 14 can grasp the bottom of the yarn cheese 30. The rectangular-coordinate planar moving mechanism 10 having X, Y-direction moving units moves so that the two curved plates 14 approach the target yarn cheese, and then the cylinder assembly 3 performs the extension action so that the two curved plates 14 rotate to grasp the yarn cheese 30 firmly. Next, the rotating-lifting mechanism 22 performs the lift action so that the grasped yarn cheese 30 leaves the yarn cage, and the rectangular-coordinate planar moving mechanism 10 having X, Y-direction moving units moves to convey the yarn cheese to a next logistic unit.

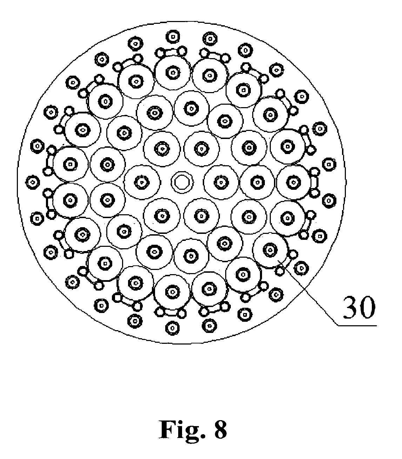

As shown in Fig. 7 and Fig. 8, the automated yarn grasping machine repeats the grasping action to grasp all yarn cheeses in any yarn cage, wherein the automated yarn grasping machine needs to grasp yarn cheeses from the outer circle to the inner circle; after the outer circle of yarn cheeses is grasped and grasping space is left for the curved plate 14, the automated yarn grasping machine performs the inner circle of yarn grasping.

Besides the above embodiments, those skilled in the art are likely to adopt substitute means under the thought of the disclosure, for example, use a gripper to replace the curved plate of the disclosure, set three or more drive rods or yarn grasping rods to surround yarn cheeses, and use motor driving to replace the cylinder driving of the disclosure.

The automated yarn grasping machine and the yarn grasping method according to the disclosure have advantages as follows:
the automated yarn grasping machine and the yarn grasping method can change the national traditional dyeing link of manually feeding and discharging, realize automated yarn grasping and solve the problem that there is no automated grasping method, thereby improving efficiency and reducing labour cost. This method is applicable to most vertical-cheese dyeing cages, with good commonality.

The above are only the preferred embodiments of the disclosure and not intended to limit the disclosure. For those skilled in the art, various modifications and changes can be made to the disclosure. Any modification, equivalent substitute and improvement made within the spirit and principle of the disclosure are deemed to be included within the scope of protection of the disclosure.

## Claims

1. An automated yarn grasping machine, comprising:
a yarn grasping unit (20), which comprises a gripping mechanism (21) used for gripping a yarn cheese (30) and a rotating-lifting mechanism (22) used for driving the gripping mechanism (21) to rotate and lift, wherein the yarn cheese (30) is a cylindrical yarn cheese; and
a planar moving mechanism (10), which is used for driving the yarn grasping unit (20) to move on a horizontal plane;
wherein the gripping mechanism (21) comprises: a support plate (1), which is connected with the rotating-lifting mechanism (22); an upper bearing seat (8), which is fixedly connected with the support plate (1) and has a plurality of bearing holes; a plurality of upper bearings (12), which is mounted in the bearing holes of the upper bearing seat (8) respectively; a plurality of pivotable drive rods (6, 7) which pass through the inner hole of the upper bearing (12); a gripping piece, (11, 14) which is fixed on the lower part of each drive rod (6, 7) wherein adjacent gripping pieces (11, 14) form a gripping space to grip the yarn cheese (30) a drive device (3) which is mounted on the support plate (1) and is connected with the drive rods (6, 7) to drive the drive rods to rotate; there are two upper bearings (12) and two drive rods (6, 7) and
wherein a first drive rod (6) of the drive rods is fixedly provided with a fan-shaped toothed plate (4) having a push rod, which is connected with the drive device (3) a second drive rod (7) is fixedly provided with a toothed plate (5); the toothed plate (5) is meshed with the fan-shaped toothed plate (4) having a push rod; and wherein the first drive rod (6) and the second drive rod (7) are juxtaposed and spaced.

2. The automated yarn grasping machine according to claim 1, wherein the gripping piece comprises a yarn grasping rod (11) connected with the lower part of the drive rod (6, 7) A and a curved plate (14) connected with the yarn grasping rod (11); the two curved plates (14) are arranged symmetrically, with curved surfaces facing each other.

3. The automated yarn grasping machine according to claim 2, wherein the gripping mechanism (21) further comprises a distance bushing (15), which has two bushing holes; the two bushing holes are connected with the lower parts of the two yarn grasping rods (11) respectively, to limit the distance between the two yarn grasping rods (11).

4. The automated yarn grasping machine according to claim 1, wherein the drive device is a cylinder assembly (3), of which the output end drives the drive rods (6, 7).

5. The automated yarn grasping machine according to claim 1, wherein the gripping mechanism (21) further comprises: a lower bearing seat (9), which is fastened with the support plate (1) and is arranged below the upper bearing seat (8), wherein the bearing holes of the lower bearing seat (9) are concentric to the bearing holes of the upper bearing seat (8) respectively; and a lower bearing (13), which is arranged in the bearing hole of the lower bearing seat (9).

6. An automated yarn grasping method, which uses the automated yarn grasping machine described in any one of claims 1 to 5 and comprises the following steps:
a step of moving and positioning, in which the moving mechanism (10) drives the yarn grasping unit (20) to a horizontal position for grasping a yarn cheese (30) and the rotating-lifting mechanism (22) rotates and lowers the gripping mechanism (21) to a vertical position for gripping the yarn cheese;
a step of gripping, in which the gripping mechanism (21) grips the yarn cheese;
a step of lifting and moving, in which the rotating-lifting mechanism (22) raises the gripping mechanism (21) to a vertical leaving position, and the moving mechanism (10) drives the yarn grasping unit (20) to another horizontal position on the horizontal plane.

7. The automated yarn grasping method according to claim 6, further comprising: repeating the step of moving and positioning, the step of gripping and the step of moving and lifting, and grasping a plurality of yarn cheeses (30) in turn from the outer circle to the inner circle of a yarn cage.

## Patentansprüche

1. Automatisierte Garngreifmaschine, die Folgendes umfasst:
eine Garngreifeinheit (20), die einen Greifmechanismus (21) umfasst, der zum Ergreifen einer Garnkreuzspule (30) verwendet wird, und einen Rotationshebemechanismus (22) umfasst, der zum Antreiben des Greifmechanismus (21) verwendet wird, um ein Rotieren und Heben auszuführen, wobei die Garnkreuzspule (30) eine zylindrische Garnkreuzspule ist; und
einen planaren Bewegungsmechanismus (10), der zum Antreiben der Garngreifeinheit (20) verwendet wird, um sich in einer horizontalen Ebene zu bewegen;
wobei der Greifmechanismus (21) Folgendes umfasst: eine Stützplatte (1), die mit dem Rotationshebemechanismus (22) verbunden ist; einen oberen Lagersitz (8), der fest mit der Stützplatte (1) verbunden ist und mehrere Lagerlöcher aufweist; mehrere obere Lager (12), die jeweils in den Lagerlöchern des oberen Lagersitzes (8) montiert sind; mehrere schwenkbare Antriebsstäbe (6, 7), die durch das innere Loch des oberen Lagers (12) hindurchreichen; ein Greifstück (11, 14), das am unteren Teil jedes Antriebsstabes (6, 7) befestigt ist, wobei benachbarte Greifstücke (11, 14) einen Greifraum bilden, um die Garnkreuzspule (30) zu ergreifen; eine Antriebsvorrichtung (3), die an der Stützplatte (1) montiert ist und mit den Antriebsstäben (6, 7) verbunden ist, um die Antriebsstäbe in einer Drehbewegung anzutreiben; wobei zwei obere Lager (12) und zwei Antriebsstäbe (6, 7) vorhanden sind, und
wobei ein erster Antriebsstab (6) der Antriebsstäbe fest mit einer fächerförmigen Zahnplatte (4) versehen ist, die eine Schubstange aufweist, die mit der Antriebsvorrichtung (3) verbunden ist; wobei ein zweiter Antriebsstab (7) fest mit einer Zahnplatte (5) versehen ist; wobei die Zahnplatte (5) mit der fächerförmigen Zahnplatte (4) verzahnt ist, die eine Schubstange aufweist; und wobei der erste Antriebsstab (6) und der zweite Antriebsstab (7) einander gegenüberliegen und voneinander beabstandet sind.

2. Automatisierte Garngreifmaschine nach Anspruch 1, wobei das Greifstück einen Garngreifstab (11) umfasst, der mit dem unteren Teil des Antriebsstabes (6, 7) verbunden ist, und eine gekrümmte Platte (14) umfasst, die mit dem Garngreifstab (11) verbunden ist; wobei die zwei gekrümmten Platten (14) symmetrisch angeordnet sind, wobei die gekrümmten Flächen einander zugewandt sind.

3. Automatisierte Garngreifmaschine nach Anspruch 2, wobei der Greifmechanismus (21) des Weiteren eine Distanzbuchse (15) umfasst, die zwei Buchsenlöcher hat; wobei die zwei Buchsenlöcher jeweils mit den unteren Teilen der zwei Garngreifstäbe (11) verbunden sind, um die Distanz zwischen den zwei Garngreifstäben (11) zu begrenzen.

4. Automatisierte Garngreifmaschine nach Anspruch 1, wobei die Antriebsvorrichtung eine Zylinderbaugruppe (3) ist, deren Abtriebsende die Antriebsstäbe (6, 7) antreibt.

5. Automatisierte Garngreifmaschine nach Anspruch 1, wobei der Greifmechanismus (21) des Weiteren Folgendes umfasst: einen unteren Lagersitz (9), der an der Stützplatte (1) befestigt ist und unter dem oberen Lagersitz (8) angeordnet ist, wobei die Lagerlöcher des unteren Lagersitzes (9) jeweils konzentrisch zu den Lagerlöchern des oberen Lagersitz (8) angeordnet sind; und ein unteres Lager (13), das in dem Lagerloch des unteren Lagersitzes (9) angeordnet ist.

6. Automatisiertes Garngreifverfahren, das mit der automatisierten Garngreifmaschine nach einem der Ansprüche 1 bis 5 ausgeführt wird, und das folgende Schritte umfasst:
einen Schritt des Bewegens und Positionierens, in dem der Bewegungsmechanismus (10) die Garngreifeinheit (20) in eine horizontale Position antreibt, um eine Garnkreuzspule (30) zu ergreifen, und der Rotationshebemechanismus (22) den Greifmechanismus (21) in eine vertikale Position zum Ergreifen der Garnkreuzspule dreht und absenkt;
einen Schritt des Ergreifens, in dem der Greifmechanismus (21) die Garnkreuzspule ergreift;
einen Schritt des Anhebens und des Bewegens, in dem der Rotationshebemechanismus (22) den Greifmechanismus (21) in eine vertikale Ausstiegsposition hebt, und der Bewegungsmechanismus (10) die Garngreifeinheit (20) in eine andere horizontale Position in der horizontalen Ebene antreibt.

7. Automatisiertes Garngreifverfahren nach Anspruch 6, das des Weiteren Folgendes umfasst: Wiederholen der Schritt des Bewegens und Positionierens, des Schrittes des Ergreifens, und des Schrittes des Bewegens und Anhebens, und Ergreifen mehrerer Garnkreuzspulen (30) nacheinander vom äußeren Kreis zum inneren Kreis eines Garnkuchens.

## Revendications

1. Machine de capture de fil automatique, comprenant :
une unité de capture de fil (20) qui comprend un mécanisme de préhension (21) utilisé pour saisir une bobine croisée de fil (30) et un mécanisme de levage-rotation (22) utilisé pour entraîner le mécanisme de préhension (21) pour la rotation et le levage, dans laquelle la bobine croisée de fil (30) est une bobine croisée de fil cylindrique ; et
un mécanisme de déplacement dans un plan (10) qui est utilisé pour entraîner l'unité de capture de fil (20) pour se déplacer dans un plan horizontal ;
dans laquelle le mécanisme de préhension (21) comprend : une plaque de support (1) qui est reliée au mécanisme de levage-rotation (22) ; et un siège de palier supérieur (8) qui est relié de manière fixe à la plaque de support (1) et a une pluralité d'alésages de palier ; une pluralité de paliers supérieurs (12) qui sont respectivement montés dans les alésages de palier du siège de palier supérieur (8) ; une pluralité de tiges d'actionnement pivotantes (6, 7) qui passent à travers l'alésage intérieur du palier supérieur (12) ; un élément de préhension (11, 14) qui est fixé sur la partie inférieure de chaque tige d'actionnement (6, 7), dans laquelle des éléments de préhension (11, 14) adjacents forment un espace de préhension pour saisir la bobine croisée de fil (30) ; un dispositif d'entrainement (3) qui est monté sur la plaque de support (1) et est relié aux tiges d'actionnement (6, 7) pour entraîner les tiges d'actionnement en rotation ; deux paliers supérieurs (12) et deux tiges d'actionnement (6, 7) étant présents ; et
dans laquelle une première tige d'actionnement (6) des tiges d'actionnement est fournie de manière fixe avec une plaque crantée en forme d'éventail (4) ayant une tige de poussée qui est reliée au dispositif d'entraînement (3) ; une deuxième tige de poussée (7) étant munie de manière fixe d'une plaque crantée (5) ; la plaque crantée (5) étant en prise avec la plaque crantée en forme d'éventail (4) ayant une tige de poussée ; et dans laquelle la première tige d'actionnement (6) et la deuxième tige d'actionnement (7) sont juxtaposées et espacées.

2. Machine de capture de fil automatique selon la revendication 1, dans laquelle l'élément de préhension comprend une tige de capture de fil (11) reliée à la partie inférieure de la tige d'actionnement (6, 7) et une plaque courbe (14) reliée à la tige de capture de fil (11) ; les deux plaques courbes (14) étant disposées symétriquement avec des surfaces courbes se faisant face l'une l'autre.

3. Machine de capture de fil automatique selon la revendication 2, dans laquelle le mécanisme de préhension (21) comprend en outre une douille d'écartement (15) ayant deux trous de douille ; les deux trous de douille étant respectivement reliés aux parties inférieures des deux tiges de capture de fil (11) pour limiter la distance entre les deux tiges de capture de fil (11).

4. Machine de capture de fil automatique selon la revendication 1, dans laquelle le dispositif d'entraînement est un bloc cylindre (3) dont l'extrémité de sortie entraîne les tiges d'actionnement (6, 7).

5. Machine de capture de fil automatique selon la revendication 1, dans laquelle le mécanisme de préhension (21) comprend en outre : un siège de palier inférieur (9) qui est fixé sur la plaque de support (1) et est disposé sous le siège de palier supérieur (8), dans laquelle les alésages de palier du siège de palier inférieur (9) sont respectivement concentriques par rapport aux alésages de palier du siège de palier supérieur (8) ; et un palier inférieur (13) qui est disposé dans l'alésage de palier du siège de palier inférieur (9).

6. Procédé se capture de fil automatique, lequel utilise la machine de capture de fil automatique décrite dans l'une quelconque des revendications 1 à 5 et comprend les étapes suivantes :
une étape de déplacement et de positionnement où le mécanisme de déplacement (10) entraîne l'unité de capture de fil (20) dans une position horizontale pour capturer une bobine croisée de fil (30) et où le mécanisme de levage-rotation (22) fait tourner et abaisse le mécanisme de préhension (21) vers une position verticale pour saisir la bobine croisée de fil ;
une étape de saisie où le mécanisme de préhension (21) saisit la bobine croisée de fil :
une étape de levage et de déplacement où le mécanisme de levage-rotation (22) élève le mécanisme de préhension (21) vers une position de levage verticale et où le mécanisme de déplacement (10) entraîne l'unité de capture de fil (20) vers une autre position horizontale sur le plan horizontal.

7. Procédé de capture de fil automatique selon la revendication 6, comprenant en outre : la répétition de l'étape de déplacement et de positionnement, de l'étape de saisie et de l'étape de déplacement et de levage, et la capture d'une pluralité de bobines croisées de fil (30), tour à tour, depuis le cercle extérieur jusqu'au cercle intérieur d'une boîte de fil.
